# EUROPÄISCHE PATENTSCHRIFT

(11) **EP 0 852 838 B1**
(45) Veröffentlichungstag und Bekanntmachung des Hinweises auf die Patenterteilung: **15.09.1999**
(21) Anmeldenummer: 96927029.7
(22) Anmeldetag: 17.07.1996
(51) Int. Cl.: H02G 3/08

(54) **GEHÄUSEDICHTUNG FÜR LEITUNGSDURCHFÜHRUNGSÖFFNUNGEN**
HOUSING SEAL FOR CABLE THROUGH-DUCT APERTURES
JOINT DE BOITIER POUR OUVERTURES DE PASSAGE DE CABLE

(30) Priorität: 29.09.1995 DE 19536456
(43) Veröffentlichungstag der Anmeldung: 15.07.1998
(73) Patentinhaber: Richard Hirschmann GmbH & Co., 72654 Neckartenzlingen (DE)
(72) Erfinder: HAGMANN, Bernd, D-73312 Geislingen (DE)
(74) Vertreter: Stadler, Heinz, Dipl.-Ing.
(86) Internationale Anmeldenummer: EP9603137
(87) Internationale Veröffentlichungsnummer: WO9713306

(56) Entgegenhaltungen:
- DE-A- 3 237 698
- DE-U- 9 102 752
- FR-A- 2 636 790

## Beschreibung

Die Erfindung betrifft eine Gehäusedichtung für Leitungsdurchführungsöffnungen, die in eine der Leitungsdurchführungsöffnung zugeordnete Aufnahme einsetzbar ist, wobei die Gehäusedichtung wenigstens zwei Dichtungsbereiche mit unterschiedlichem Dichtungsprofil aufweist und wahlweise in unterschiedlichen Richtungen in die Aufnahme einsetzbar ist.

Aus der FR-A-26 36 790 ist ein Dichtungselement für eine Leitungsdurchführungsöffnung bekannt, das aus einem elastischen Material besteht und in dem Löcher mit unterschiedlichen Durchmessern für unterschiedlich dicke Kabel vorgesehen sind. Über Schlitze in den Elementen können die Kabel in die Löcher mit entsprechendem Innendurchmesser eingelegt werden, und danach werden die Elemente in entsprechende Aufnahmen eines Gehäuses eingesetzt. Zum Schließen und Abdichten der Löcher, in denen keine Kabel liegen, sind zusätzliche Teile vorgesehen, die in die offenen Löcher eingesetzt werden. Hierfür sind mehrere Teile erforderlich, die auf Lager gehalten und am Ort der Installation vorhanden sein müssen, wodurch sich wiederum die Herstellungs- und Lagerhaltungskosten erhöhen.

Aus der DE-A-40 07 029 ist ein Gerätegehäuse mit einer Kabeleinführungsöffnung bekannt, bei der ein in Führungsnuten geführter Wendeschieber vorgesehen ist, der je nach der Richtung der Einführung in die Führungsnuten entweder die Kabelöffnung abschließt oder das Kabel in der Einführungsöffnung festlegt. Auf den Seitenflächen der Schieber sind Rastnasen vorgesehen, die bei Abstützen an einer Gehäusekante den Schieber in seiner Lage halten. Diese Anordnung ist zur Abdichtung einer Kabeleinführungsöffnung nicht vorgesehen und auch nicht geeignet, weil Dichtungselemente nicht verwendet werden und auch im Falle von der Verwendung von Dichtungselementen für die Abdichtung ein ausreichender, über lange Zeiträume hinweg anhaltender Druck für eine zuverlässige Abdichtung durch die Rastnasen nicht möglich ist.

Aus der DE-C-43 10 451 ist ein Verschlußelement für Kabeldurchgänge in Wänden, beispielsweise in Schottwänden zwischen Motor- und Fahrgastraum von Kraftfahrzeugen bekannt, das auf die durch die Schottwand hindurchgehenden Kabel drückt und dadurch eine Isolation für Schall, Wasser oder Gerüche bei eingelegten Kabeln ermöglicht. Dieses bekannte Verschlußelement und deren Anordnung ist jedoch nicht dazu vorgesehen oder geeignet, den Wanddurchgang bei nicht verlegten Kabeln zu schließen oder abzudichten.

Aus der DE-U-91 02 752 ist eine Anordnung zur Zugentlastung für ein in ein Gehäuse einzuführendes Kabel mit einer Polygonplatte vorgesehen, die an ihren Schmalseiten im Profil unterschiedliche Ausnehmungen aufweist und in eine Gehäusetasche eines Arms auswechselbar einsteckbar ist. Durch die im Profil unterschiedlichen Ausnehmungen und ein entsprechendes Einstecken der Polygonplatte in die Gehäusetasche ist eine Zugentlastung für Kabeln mit unterschiedlichen Durchmessern möglich. Diese bekannte Einrichtung zur Zugentlastung ist jedoch nicht für eine Gehäusedichtung vorgesehen oder geeignet, weil die Ausnehmungen, die keine Kabel aufnehmen, einen freien Durchlaß in das Gehäuseinnere ermöglichen. Um diese Durchlässe zu verschließen, wären zusätzliche Verschlußdichtungen erforderlich.

In der nicht vorveröffentlichten deutschen Patentanmeldung 44 39 784 derselben Anmelderin ist eine Gehäusedichtung für Leitungsdurchführungsöffnungen bekannt, bei der für die wenigstens zwei Dichtungsbereiche der Gehäusedichtung bezüglich der Durchführvorrichtung nebeneinanderliegende Abschnitte vorgesehen sind, die sich bei den wahlweisen, in unterschiedlichen Richtungen in die Aufnahme eingesetzter Gehäusedichtung auf unterschiedlichen Auflageflächen abstützen. Diese Gehäusedichtung hat sich sehr bewährt. Durch die Ausbildung der den Auflageflächen komplementären Bereiche der nebeneinanderliegenden Abschnitte der Gehäusedichtung kann die Höhe der Gehäusedichtung jedoch nicht unter ein bestimmtes Maß verringert werden, so daß die Gehäusedichtung und damit auch die Aufnahme für die Gehäusedichtung am Gehäuse relativ große Abmessungen aufweist. Darüber hinaus weist die bekannte Gehäusedichtung bei Verwendung unsymmetrischer Kabelprofile, insbesondere unsymmetrischer Flachkabel Nachteile auf, wenn derartige unsymmetrische Kabel durch ein Gehäuse durchgeschleift werden. In diesem Falle sind zwei unterschiedliche Dichtungen erforderlich, die hinsichtlich der Unsymmetrie des Kabels um 180° verdreht sind. Auf Grund der bezüglich der Durchführungsrichtung nebeneinanderliegenden Abschnitte, wo von einer das Kabel-Dichtungsprofil aufweist, ist es daher nicht möglich, mit einer einzigen Dichtung auszukommen.

Der Erfindung liegt daher die Aufgabe zugrunde, eine Gehäusedichtung auch für unsymmetrische Kabelprofile zu schaffen, ohne daß bei Durchschleifen eines unsymmetrischen Kabels durch ein Gehäuse für den Ein- und Austritt des unsymmetrisch profilierten Kabels unterschiedliche Gehäusedichtungen erforderlich sind. Darüber hinaus soll die Gehäusedichtung eine möglichst geringe Bauhöhe aufweisen.

Die gestellte Aufgabe wird erfindungsgemäß dadurch gelöst, daß die Dichtungsbereiche an benachbarten Seiten der Gehäusedichtung vorgesehen sind, wobei eine Seite in Durchführungs-Richtung der Leitung weist. Auf Grund dieser Erfindungsmerkmale ist es nicht nur möglich, Wendedichtungen mit geringer Bauhöhe, sondern insbesondere auch für Kabel, insbesondere Flachkabel mit unsymmetrischem Kabelprofil zu schaffen, wobei diese erfindungsgemäße Gehäusedichtung in gegenüberliegenden Öffnungen eines Gehäuses verwendbar ist, wenn ein unsymmetrisch profiliertes Kabel durch dieses Gehäuse durchgeschleift wird. Die Herstellungs- und Lagerungskosten werden daher mit der erfindungsgemäßen Gehäusedichtung gering gehalten.

Gemäß einer bevorzugten Ausführungsform der Erfindung ist eine der benachbarten, vorzugsweise zueinander rechtwinklig ausgerichteten Seiten der Gehäusedichtung eben. Wenn diese Gehäusedichtung in die Aufnahme so eingesetzt wird, daß die ebene Seite nach oben weist, ist das Gehäuse für den Fall abgedichtet, daß keine Kabel durch die Leitungsdurchführungsöffnung geführt wird. Diese ebene Seite liegt gemäß diesem Ausführungsbeispiel in voller Fläche ohne Profilierung an der Gegenfläche des Gehäuses an, so daß eine zuverlässige Abdichtung auf Grund der relativ großen Abdichtfläche gewährleistet ist.

Eine Seite der einander benachbarten Seiten der Gehäusedichtung weist ein dem Leitungsprofil entsprechende Profilierung auf. Durch Herausnahme der Gehäusedichtung aus der Aufnahme und einer Drehung um 90° um eine quer zur Leitungsdurchführungsrichtung weisende Achse ist es daher auf einfache Weise möglich, eine Gehäuseöffnung mit demselben Element sowohl bei Durchgang eines Kabels durch die Gehäuseöffnung als auch ohne Durchgang eines Kabels abzudichen.

Gemäß einer sehr vorteilhaften Ausführungsform der Erfindung weist eine Seite der Gehäusedichtung eine Profilierung entsprechend einem unsymmetrischen Leitungsprofil, insbesondere einem unsymmetrischen Flachkabelprofil auf. Bei Verwendung von unsymmetrischen Flachkabeln und deren Durchschleifung durch ein Gehäuse mit gegenüberliegenden Öffnungen kann daher die gleiche Gehäusedichtung verwendet werden, so daß auch für diesen Fall keine zusätzliche Gehäusedichtung mit unterschiedlichem bzw. spiegelsymmetrischem Profil erforderlich ist.

Gemäß einer weiteren vorteilhaften Ausführungsform der Erfindung weist die Gehäusedichtung und die Aufnahme jeweils komplementäre Codiereinrichtungen, vorzugsweise wenigstens eine Nase und eine entsprechende Ausnehmung, zum seitenrichtigen Einsetzen der Gehäusedichtung in die Aufnahme auf. Auf diese Weise wird ein Falscheinbau verhindert bzw. erkannt, weil die Gehäusedichtung nur in einer vorgegebenen Weise in die Aufnahme dadurch einsetzbar ist.

Die Erfindung wird nachfolgend anhand eines Ausführungsbeispiels unter Bezugnahme auf die Figuren erläutert.

Es zeigen:
- Fig. 1: zwei gegenüberliegende Gehäusewände mit Gehäuseaufnahmen sowie die entsprechenden Gehäusedichtungen in perspektivischer Prinzipdarstellung, und
- Fig. 2: einen Querschnitt durch eine Gehäusewandung bzw. eine Gehäusedichtungs-Aufnahme sowie die Gehäusedichtung in anderer räumlicher Zuordnung zur Aufnahme, jeweils in einer perspektivischen Prinzipdarstellung.

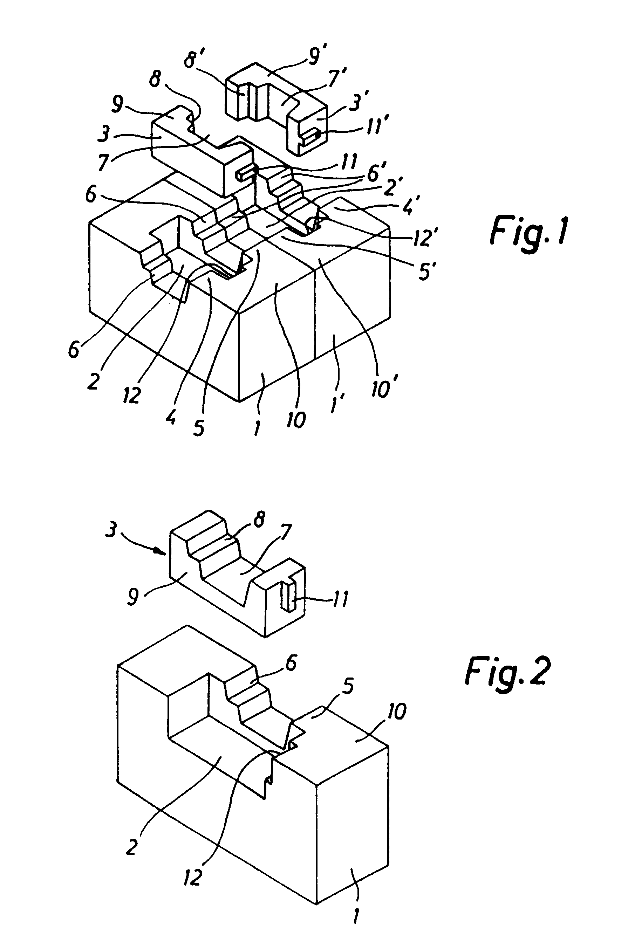

Die in den Fig. 1 und 2 dargestellten Kabeldurchführungseinrichtungen sind bei diesem Ausführungsbeispiel für Flachkabel vorgesehen, die unsymmetrisch profiliert sind. Wie aus den Fig. 1 und 2 ersichtlich ist, weisen die Gehäusewände 1, 1' jeweils Aufnahmekammern 2, 2' zur Aufnahme von Gehäusedichtungen 3, 3' auf. Die Wände 4, 5 bzw. 4', 5' der Aufnahmekammern 2, 2' sind entsprechend der Darstellung in Fig. 2 mit unsymmetrischen Profilen ausgestattet, wobei an der dem Betrachter der Zeichnung abgewandten Seite seitlich Stufungen 6, 6' ausgebildet sind.

Die Gehäusedichtungen 3, 3' weisen in entsprechender Weise ebenfalls unsymmetrische Profilierungen 7, 7' auf, wobei wiederum Abstufungen 8, 8' auf der dem Betrachter abgewandten Innenseite der Gehäusedichtung vorgesehen sind. Wenn die Gehäusedichtungen 3,3' in der in Fig. 2 dargestellten Richtung in die Aufnahmekammern 2, 2' eingesetzt werden, fluchten die Profile 6, 6' der Kammerwände 4, 4' mit den Profilen 8, 8' der Gehäusedichtungen 3, 3'. Das entsprechend profilierte unsymmmetrische Flachkabel ist also in der Gehäusedichtung sicher geführt und abgedichtet.

Im Falle, daß durch die Gehäuseöffnung kein Kabel geführt werden soll, wird diese auf einfache Weise dadurch abgedichtet, daß ihre Gehäusedichtung 3 bzw. 3' aus der in Fig. 2 dargestellten Lage um 90° um eine quer zur Kabeldurchführungsrichtung verlaufende Achse gedreht und danach wieder in die Aufnahmekammer 2 bzw. 2' eingesetzt wird (vgl. Fig. 1). Die jetzt nach oben weisende ebene Seite 9, 9' der Gehäusedichtung 2, 2' fluchtet nunmehr mit der Oberseite 10, 10' der Gehäusewand 1, 1' und bildet eine sichere und zuverlässige Abdichtung für diesen Fall, daß keine Leitung durch die Gehäuseöäffnung durchgeführt ist.

Wie insbesondere aus Fig. 1 ersichtlich ist, reicht eine einzige Gehäusedichtungs-Form aus um, die Gehäuseöffnung auch bei Durchschleifen eines unsymmetrisch profilierten Kabels bzw. Flachkabels sowohl an der Eintritts- als auch an der gegenüberliegenden Austrittswand des Gehäuses abzudichten.

Die Gehäusedichtungen weisen Nasen 11, 11' auf, die in den verschiedenen Einsatzrichtungen jeweils in komplementären Ausnehmungen 12, 12' an der Gehäusewand 1, 1' bzw. der Aufnahmekammern 2, 2'eingreifen. Bei Drehung um 180°, wenn also die Nase 11, 11' der Gehäusedichtung 3, 3'in die andere Richtung weisen, ist das Einsetzen der Gehäusedichtung 3, 3' in die Aufnahmekammer 2, 2' nicht möglich, da auf der hinteren Seite der Aufnahmekammer Ausnehmungen für die Nase 11, 11' der Gehäusedichtung 3, 3' nicht vorgesehen sind. Auf diese Weise wird ein Falscheinbau verhindert bzw. eindeutig aufgezeigt.

Die Erfindung wurde anhand eines bevorzugten Ausführungsbeispiels beschrieben. Dem Fachmann sind jedoch Abwandlungen und Ausgestaltungen der erfindungsgemäßen Gehäusedichtung bzw. der dafür vorgesehenen Aufnahmekammern möglich, ohne daß der Erfindungsgedanke verlassen wird. Beispielsweise ist es möglich, einen Falscheinbau dadurch zu verhindern, daß wenigstens eine Seite der Gehäusedichtung 2, 2' eine andere Winkelfläche aufweist als die komplementäre Fläche der Aufnahmekammer 2, 2'.

## Patentansprüche

1. Gehäusedichtung (3, 3') für Leitungsdurchführungsöffnungen, die in eine den Leitungsdurchführungsöffnungen zugeordnete Aufnahme (2, 2') einsetzbar ist, wobei die Gehäusedichtung (3, 3') wenigstens zwei Dichtungsbereiche (7, 7' bzw. 9, 9') mit unterschiedlichem Dichtungsprofil aufweist und wahlweise in unterschiedlichen Richtungen in die Aufnahme (2, 2') einsetzbar ist,
dadurch **gekennzeichnet**, daß die zwei Dichtungsbereiche (7, 7' bzw. 9, 9') an benachbarten Seiten der Gehäusedichtung (3, 3') vorgesehen sind, wobei eine Seite in Durchführungsrichtung der Leitung weist.

2. Gehäusedichtung nach Anspruch 1, dadurch gekennzeichnet, daß eine Seite (9, 9') der Gehäusedichtung (3, 3') eben ist.

3. Gehäusedichtung nach Anspruch 1 oder 2, dadurch gekennzeichnet, daß eine Seite (7, 7') der Gehäusedichtung (3, 3') eine dem Leitungsprofil entsprechende Profilierung aufweist.

4. Gehäusedichtung nach einem der vorhergehenden Ansprüche, dadurch gekennzeichnet, daß eine Seite (7, 7') eine Profilierung entsprechend einem unsymmetrischen Leitungsprofil, insbesondere einem unsymmetrischen Flachkabelprofil, aufweist.

5. Gehäusedichtung nach einem der vorhergehenden Ansprüche, dadurch gekennzeichnet, daß die Gehäusedichtung (3, 3') und die Aufnahme (2, 2') jeweils komplementäre Codiereinrichtungen (11, 11' bzw. 12, 12') zum seitenrichtigen Einsetzen der Gehäusedichtung (3, 3') in die Aufnahme (2, 2') aufweist.

## Claims

1. Housing sealing device (3, 3') for line feed-through orifices which housing sealing device can be inserted into a receiving device (2, 2') allocated to the line feed-through orifices, wherein the housing sealing device (3, 3') comprises at least two sealing regions (7, 7' and 9, 9') with a different sealing profile and can be inserted optionally in different directions into the receiving device (2, 2'), characterised in that the two sealing regions (7, 7' and 9, 9') are provided on adjacent sides of the housing sealing device (3, 3'), wherein one side points in the feed-through direction of the line.

2. Housing sealing device according to claim 1, characterised in that one side (9, 9') of the housing sealing device (3, 3') is planar.

3. Housing sealing device according to claim 1 or 2, characterised in that one side (7, 7') of the housing sealing device (3, 3') comprises a profile corresponding to the line profile.

4. Housing sealing device according to any one of the preceding claims, characterised in that one side (7, 7') comprises a profile corresponding to an asymmetrical line profile, in particular to an asymmetrical flat cable profile.

5. Housing sealing device according to any one of the preceding claims, characterised in that the housing sealing device (3, 3') and the receiving device (2, 2') each comprises complementary coding devices (11, 11' and 12, 12') for the purpose of inserting the housing sealing device (3, 3') into the receiving device (2, 2') on the correct side.

## Revendications

1. Etanchéité de boîtier (3, 3') pour des ouvertures de passage de lignes, qui peut être insérée dans un logement (2, 2') associé aux ouvertures de traversée de lignes, l'étanchéité de boîtier (3, 3') présentant au moins deux zones d'étanchéité (7, 7') ou (9, 9') avec un profil d'étanchéité différent et pouvant être insérée au choix dans différentes directions dans le logement (2, 2'), caractérisée en ce que les deux zones d'étanchéité (7, 7') ou (9, 9') sont prévues sur des côtés voisins de l'étanchéité de boîtier (3, 3'), un côté étant dirigé dans le sens de traversée de la ligne.

2. Etanchéité de boîtier selon la revendication 1, caractérisée en ce qu'un côté (9, 9') de l'étanchéité de boîtier (3, 3') est plan.

3. Etanchéité de boîtier selon la revendication 1 ou 2, caractérisée en ce qu'un côté (7, 7') de l'étanchéité de boîtier (3, 3') présente un profilage correspondant au profil de la ligne.

4. Etanchéité de boîtier selon l'une des revendications précédentes, caractérisée en ce qu'un côté (7, 7') présente un profilage correspondant à un profil de ligne asymétrique, en particulier à un profil de câble plat asymétrique.

5. Etanchéité de boîtier selon l'une des revendications précédentes, caractérisée en ce que l'étanchéité de boîtier (3, 3') et le logement (2, 2') présentent chacun des dispositifs de codage (11, 11') ou (12, 12') correspondants, pour l'insertion du bon côté de l'étanchéité de boîtier (3, 3') dans le logement (2, 2').
